# FASCICULE DE BREVET EUROPEEN

(11) **EP 2 465 598 B1**
(45) Date de publication et mention de la délivrance du brevet: **02.03.2016**
(21) Numéro de dépôt: 11193286.9
(22) Date de dépôt: 13.12.2011
(51) Int. Cl.: B01D 53/50, B01D 46/02, F23J 15/00, B01J 19/20

(54) **Procédé d'épuration de fumées de combustion**
Verfahren zur Rauchgasreinigung
Method for purifying combustion fumes

(30) Priorité: 15.12.2010 FR 1060546
(43) Date de publication de la demande: 20.06.2012
(73) Titulaire: LAB SA, 69007 Lyon (FR)
(72) Inventeur: Siret, Bernard, 69200 VENISSIEUX (FR); Tabaries, Franck, 83190 OLLIOULES (FR)
(74) Mandataire: Grand, Guillaume

(56) Documents cités:
- EP-A1- 1 949 956
- WO-A1-2004/026443
- US-A- 5 814 288

## Description

La présente invention concerne un procédé d'épuration de fumées issues de la combustion de déchets ou de combustibles fossiles.

L'incinération de déchets, tout comme la génération d'énergie par la combustion de combustibles fossiles, ont un intérêt majeur pour les sociétés modernes. Dans les deux cas, le processus de combustion génère des fumées qui sont trop chargées en polluants pour pouvoir être rejetées dans l'atmosphère sans traitement. Ces fumées contiennent en particulier des oxydes de soufre, dont le dioxyde de soufre (SO₂) et le trioxyde de soufre (SO₃), des acides halogénés, notamment de l'acide chlorhydrique (HCl), des poussières, des métaux lourds et des composés organiques plus ou moins toxiques, ainsi que des oxydes d'azote.

Plusieurs technologies sont utilisées pour épurer ces fumées de leurs polluants.

Les systèmes humides, dans lesquels on met en contact les fumées à traiter avec un liquide neutralisant, occupent une place de choix pour les centrales de production d'énergie. Ces procédés sont très efficaces mais couteux en investissement et génèrent un rejet aqueux qu'il faut traiter. Même après traitement, ce rejet à l'environnement n'est pas toujours possible.

Les procédés semi-secs, dans lesquels on pulvérise un liquide chargé en réactif de neutralisation dans une tour d'atomisation et on récupère le résidu sec de la réaction ainsi que les autres solides sur un filtre ou un électrofiltre, évitent le rejet d'eau. Ces procédés semi-secs sont efficaces mais, comme il faut que les fumées aient une température assez élevée pour permettre le processus d'atomisation, la récupération énergétique est limitée. Autrement dit, la production d'énergie n'est plus aussi poussée qu'elle pourrait l'être. De plus, les réacteurs d'atomisation sont volumineux et occupent une grande place au sol. Enfin, l'utilisation de ces réacteurs nécessite la préparation d'un réactif alcalin sous une forme liquide, comme un lait de chaux, et cette préparation nécessite tout un dispositif complémentaire ad hoc.

Les procédés secs, dans lesquels on met en contact les fumées à traiter avec un réactif de neutralisation pulvérulent, tel que de la chaux, de la magnésie ou du bicarbonate de sodium, qui va réagir avec les polluants acides et dans lesquels le produit de la réaction, ainsi que les autres solides présents, sont collectés dans un filtre à manches ou dans un électrofiltre, sont efficaces et relativement peu coûteux en investissement. En pratique, actuellement, on ne peut cependant pas utiliser comme réactifs directement des oxydes alcalino-terreux, comme la chaux vive (CaO), alors que ces réactifs de type oxyde sont bien meilleur marché que les réactifs alcalino-terreux correspondants de type hydroxyde. On doit donc soit préalablement procéder séparément à l'extinction de l'oxyde, par le biais d'un processus dit de « slaking », soit acheter directement des hydroxydes alcalino-terreux, ce qui est bien moins économique.

La réaction d'extinction de la chaux vive par de l'eau, c'est-à-dire la réaction CaO + H₂O → Ca(OH)₂, est bien connue. La méthode traditionnelle pour procéder à cette extinction est de mettre en contact de l'eau liquide avec l'oxyde : ceci doit se faire dans des conditions soigneusement contrôlées de température, de rapport de la quantité d'eau à la quantité d'oxyde afin d'éviter les surchauffes, tout en obtenant une réactivité importante et des caractéristiques rhéologiques du lait obtenu convenables. US-6 213 629 et US-6 508 994 exposent ainsi des procédés et des dispositifs pour une telle utilisation : bien que ces dispositifs permettent effectivement l'utilisation de chaux vive par un procédé d'extinction qualifiée de sèche, les plages de fonctionnement sont assez resserrées et de légers écarts amènent vite à des problèmes opératoires, tels de des bourrages.

La réaction d'extinction peut également se faire en mettant directement en contact l'oxyde, tel que CaO, avec de la vapeur vive, c'est-à-dire de l'eau sous forme gazeuse. Un tel procédé est décrit dans WO-A-02/096820. Toutefois, la réaction d'extinction CaO + H₂O→ Ca(OH)₂ est très exothermique et conduit à une élévation de température telle que le produit n'est pas directement utilisable et difficile à manipuler. D'ailleurs, WO-A-02/096820 a pour objet la récupération de cette énergie thermique.

De son côté, WO-A-2004/026443 propose de mélanger des résidus solides, séparés de fumées à épurer, avec de la chaux vive, en prévoyant une première phase de refroidissement forcé de ce mélange par de l'air et de l'eau liquide froide, produisant ainsi l'extinction complète de la chaux vive, puis une seconde phase de mouillage du mélange de solides froids avec de la vapeur d'eau, cette seconde phase étant prévue particulièrement brève, avec une durée maximale de 30 secondes. Une caractéristique essentielle de l'enseignement technique de WO-A-2004/026443 est que le flux de vapeur d'eau, qui est injecté lors de la seconde phase précitée à des fins de mouillage du mélange de solides froids, présente une température supérieure à celle du mélange des solides, afin de créer par condensation un film d'eau sur ces solides pour capter ensuite les polluants acides des fumées par dissolution dans ce film d'eau.

Le but de la présente invention est de proposer un procédé d'épuration par voie sèche améliorés, permettant une utilisation directe astucieuse d'oxyde alcalino-terreux.

A cet effet, l'invention a pour objet un procédé d'épuration de fumées de combustion, tel que défini à la revendication 1.

L'idée à la base de l'invention est de chercher à éteindre un oxyde alcalino-terreux directement dans un réacteur spécifique intégré à l'installation d'épuration de fumées, ce réacteur étant alimenté à la fois en vapeur vive, pour déclencher la réaction d'extinction, et en résidus solides provenant des fumées de combustion traitées : le flux de solides sortant de ce réacteur est alors renvoyé dans les fumées à traiter, en constituant ainsi un flux de réactifs de neutralisation pour les polluants acides contenus dans ces fumées. Autrement dit, selon l'invention, du réactif frais de type oxyde alcalino-terreux est mis en contact, après mélange avec des résidus recirculés provenant des fumées traitées, avec un flux gazeux contenant de la vapeur d'eau : grâce aux conditions opératoires conformes à l'invention, la réaction d'extinction de l'oxyde, aussi bien au sein du réacteur d'extinction que, le cas échéant, en aval de ce réacteur, est maîtrisée, en particulier en ce qui concerne son exothermie, tout en produisant de manière efficace et en quantité suffisante des réactifs pour neutraliser les polluants acides contenus dans les fumées à traiter. Bien entendu, dans la mesure où l'objectif de l'invention est d'activer au maximum les résidus recirculés dans les fumées à traiter, on comprend que le mélange des solides précités et son exposition à de la vapeur d'eau sont avantageusement réalisés à la plus haute température disponible possible : ainsi, en particulier, aucun refroidissement forcé des solides avant leur exposition à la vapeur n'est prévu, un tel refroidissement n'étant pas nécessaire grâce à la maîtrise de l'extinction du réactif de type oxyde alcalino-terreux, conformément à l'invention. De cette façon, les réactions chimiques d'activation sont favorisées thermiquement, en particulier en ce qui concerne leur cinétique, tout en étant maîtrisées, en particulier en ce qui concerne l'exothermie de la réaction d'extinction de l'oxyde.

Des caractéristiques additionnelles avantageuses du procédé conforme à l'invention, prises isolément ou selon toutes les combinaisons techniquement possibles, sont spécifiées aux revendications dépendantes.

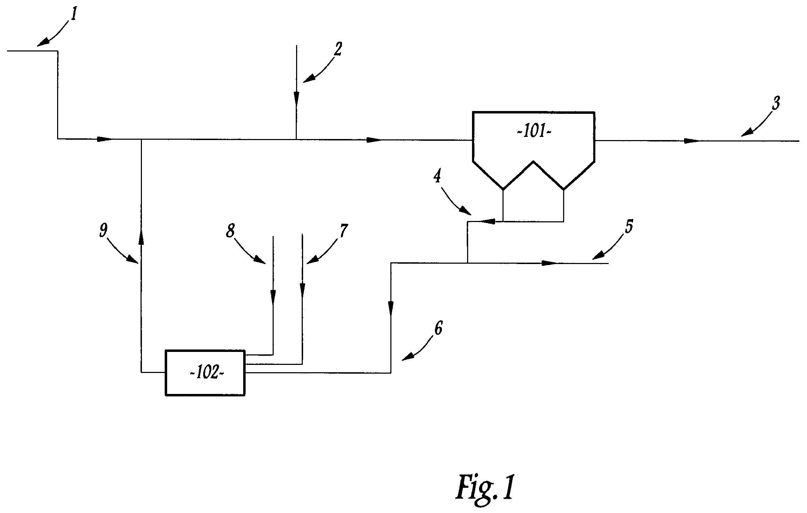

L'invention sera mieux comprise à la lecture de la description qui va suivre, donnée uniquement à titre d'exemple et faite en se référant à la figure 1 représentant schématiquement une installation de mise en oeuvre d'un procédé d'épuration conforme à l'invention.

Sur la figure 1, des fumées à épurer 1, qui proviennent d'une unité de combustion, telle qu'un incinérateur de déchets ou une centrale de production d'énergie, et qui contiennent des polluants acides comme du dioxyde de souffre et/ou de l'acide chlorhydrique, sont introduites dans un séparateur gaz-solides 101, après mélange avec un flux 9 détaillé plus loin.

Le mélange entre les fumées à traiter 1 et le flux 9 présente une température comprise entre 70 et 230°C quand il entre dans le séparateur 101.

A titre d'option non représentée, un échangeur de chaleur, tel qu'un évaporateur ou récupérateur d'énergie, ne faisant pas l'objet de l'invention, peut être présent et contribuer à faire baisser la température du mélange avant son introduction dans le séparateur 101.

En pratique, le séparateur 101 est d'une technologie connue en soi. De manière préférée, ce séparateur est un filtre à manches. En variante, il peut aussi être un électrofiltre ou un équipement similaire.

De manière optionnelle, en plus du flux 9, un autre flux 2 peut être mélangé aux fumées à traiter 1, immédiatement en amont du séparateur 101. Cet autre flux 2 est typiquement constitué d'un réactif pulvérulent destiné à neutraliser les polluants acides contenus dans les fumées 1 : à titre d'exemple et de manière non limitative, ce réactif est de la chaux ou du charbon actif.

En sortie du séparateur 101, on récupère, d'une part, des fumées épurées 3 et, d'autre part, des résidus solides 4 contenant, entre autres, les solides présents dans les fumées à épurer 1, notamment des cendres volantes. Une partie 5 des résidus solides collectés 4 est évacuée, tandis que la partie restante 6, qui représente entre 40 et 95% du débit total des résidus 4, est dirigée vers un réacteur d'extinction 102.

Selon l'invention, un réactif de neutralisation 8 constitué d'oxyde alcalino-terreux, de préférence de la chaux vive (CaO), est également introduit dans le réacteur 102. De manière optionnelle, en plus de l'oxyde alcalino-terreux constituant le réactif 8, d'autres constituants solides peuvent être introduits dans le réacteur 102, comme, à titre d'exemple non limitatif, du charbon actif.

Selon l'invention, l'extinction du réactif 8 est réalisée par de l'eau contenue dans un flux gazeux 7, contenant entre 50 et 100% en volume de vapeur d'eau. Ce flux 7 est par exemple constitué de vapeur d'eau désurchauffée à une pression comprise entre 1 et 5 bas absolus, ou de vapeur d'eau surchauffée de moins de 30°C, ou d'un mélange constitué de vapeur d'eau et de fumées épurées.

Selon une des caractéristiques de l'invention, le rapport entre la quantité de réactif 8, dont on cherche à réaliser l'extinction, et le débit des résidus solides 6 admis dans le réacteur 102 est compris entre 0,5 et 10% en masse : il est en effet critique que la fraction de réactif à éteindre, par exemple la chaux vive, soit relativement faible par rapport au total des solides passant dans le réacteur 102, sans quoi la forte enthalpie de la réaction d'extinction contribuerait à élever de manière trop importante la température du mélange des solides dans le réacteur.

Dans le cadre de la présente invention, l'extinction du réactif 8 peut n'être que partielle au sein du réacteur 102, c'est-à-dire que l'avancement de la réaction MeO + H₂O → Me(OH)₂, où Me est un métal alcalino-terreux, par exemple le calcium Ca, est inférieur à 1.

Les inventeurs ont établi, notamment par des essais en laboratoire, que ce taux d'extinction, ou encore taux d'avancement de la réaction d'extinction, dépend à la fois du temps de passage des solides dans le réacteur d'extinction 102 et du rapport stoechiométrique H₂O/MeO de la réaction d'extinction. Ainsi, les résultats résumés dans les tableaux ci-dessous ont été obtenus avec un flux gazeux 7 contenant environ 90% d'eau à 130 °C :

| Temps de passage (en minutes) | Ratio H₂O/CaO mol/mol | Taux d'extinction |
|---|---|---|
| 0 | 0 | 0% |
| 2 | 8.6 | 66% |
| 4 | 17.3 | 73% |
| 6 | 26 | 85% |
| 2 | 5.2 | 46% |
| 4 | 10.4 | 75% |
| 8 | 21 | 88% |

En sortie du réacteur 102, les résidus solides constituent le flux précité 9 et sont recyclés vers le séparateur 101, en étant introduits en amont de ce dernier. De la sorte, dans le mélange entrant dans le séparateur 101, les polluants acides des fumées à traiter 1 réagissent avec les résidus solides provenant du réacteur 102, notamment en étant fixés par ces résidus et se mélangeant aux solides initialement présents dans les fumées 1.

Ainsi, il y a lieu de bien comprendre que, puisque le réactif 8 recircule au sein de l'installation, via les flux de résidus solides 9 et 6, il n'est pas nécessaire que le taux d'extinction soit de 100% en sortie du réacteur 102, plusieurs passes ayant lieu dans ce réacteur. Aussi, puisque le réactif 8 est très dilué dans le flux de solides 6, ainsi que dilué dans les fumées à épurer 1, même si la réaction d'extinction devait se continuer en aval du réacteur 102, typiquement dans les gaines de l'installation et dans le séparateur 101, l'élévation de température qui pourrait en résulter, par exemple au niveau des manches du séparateur 101 si ce dernier est un filtre à manches, sera très faible et n'endommagera pas les manches.

Dans ce contexte, selon une des caractéristiques de l'invention, le temps de passage des solides dans le réacteur d'extinction 102 est compris entre 1 et 30 minutes par passe, de préférence compris entre 1 et 6 minutes. Selon une autre caractéristique de l'invention, le rapport stoechiométrique, défini comme le nombre de moles, par heure, d'eau dans le flux gazeux 7, divisé par le nombre de moles, par heure, de réactif 8, doit être compris entre 2 et 50, de préférence entre 3 et 10.

On notera que, conformément à l'invention, aucun refroidissement forcé du mélange de solides entre les résidus 6 et le réactif 8 n'est prévu avant l'exposition de ce mélange au flux gazeux 7 dans le réacteur 102. D'ailleurs, en pratique, en entrée du réacteur 102, la température du mélange de solides précité est typiquement supérieure à la température de rosée de la vapeur d'eau dans le flux gazeux 7. En effet, eu égard à ses raccordements avec, en aval, la ligne des fumées à épurer 1 et, en amont, le filtre de sortie du séparateur 101, le réacteur 102 travaille sensiblement à pression atmosphérique, c'est-à-dire avec une pression interne comprise entre 0,8 et 1,2 bar absolu, de préférence entre 0,9 et 1 bar absolu, de sorte que, dans le réacteur 102, la température de rosée de la vapeur d'eau contenue dans le flux gazeux 7 est nécessairement égale à 100°C, environ, voire un peu moins si la teneur en eau du flux 7 n'est pas de 100%, alors que le mélange de solides précité, mis en contact avec le flux gazeux contenant la vapeur d'eau, présente, en entrée du réacteur 102, une valeur typique d'environ 130°C à 140°C, plus généralement d'au moins 110°C. Ainsi, dans le réacteur 102, tout effet de condensation de la vapeur d'eau sur le mélange des solides 6 et 8 est exclu. Autrement dit, le flux gazeux 7 ne permet pas de mouiller le mélange de solides précité par condensation de sa vapeur d'eau, mais, comme expliqué plus haut, participe à la maîtrise de la réaction d'extinction du réactif 8, en particulier en ce qui concerne l'exothermie de cette réaction d'extinction.

En pratique, le réacteur 102 est un contacteur gaz-solides, qui assure un temps de passage tel que quantifié ci-dessus. Par exemple, ce réacteur 102 est une vis sans fin ou une double vis sans fin, qui reçoit les flux de solides 6 et 8 et dans laquelle le flux gazeux 7 est introduit. Dans ce cas, le flux gazeux 7, entrant dans le réacteur 102, est éventuellement distribué le long de la vis précitée. En variante, le réacteur 102 est constitué d'un tambour rotatif ou d'un réacteur à lit fluidisé.

L'invention peut être illustrée à l'aide de l'exemple suivant :
Une unité d'incinération produit un flux de fumées à épurer 1 valant 150000Nm³/h, qui est envoyé à un filtre à manches 101. De la chaux vive CaO est utilisé en tant que réactif de neutralisation 8, avec un débit de 300 kg/heure. Le débit de résidus recirculés 6 est de 1000 kg/heure. Le débit de chaux représente donc environ 3% du flux de solides 6.

Le flux gazeux 7, avec lequel est réalisé l'extinction de la chaux du réacteur 102, est un flux de vapeur légèrement surchauffée, présentant une pression de 3 bars absolus et une température de 140°C. Son débit est de 600 kg/heure, soit un rapport stoechiométrique de 6,2. Le temps de passe des solides dans le réacteur 102 est de 4 minutes par passe.

## Revendications

1. Procédé d'épuration de fumées de combustion, **caractérisé en ce qu'**il comprend des étapes suivant lesquelles :
- on fait traverser à des fumées à épurer (1) un séparateur gaz-solides (101),
- on admet, en entrée d'un réacteur d'extinction (102), à la fois :
- une fraction (6) des résidus solides (4) issus du séparateur (101), cette fraction étant comprise entre 40 et 95% du débit total des résidus solides (4) issus du séparateur,
- un réactif (8) constitué d'oxyde alcalino-terreux, dont le flux est compris entre 0,5 et 10% du flux de ladite fraction (6) des résidus solides (4), et
- un flux gazeux (7) qui contient entre 50 et 100% en volume de vapeur d'eau et dont le débit est tel que le ratio stoechiométrique molaire, défini comme le nombre de moles d'eau, par heure, du flux gazeux (7), divisé par le nombre de moles, par heure, du réactif (8), est compris entre 2 et 50,
le temps de passage des solides dans le réacteur (102), pendant lequel le mélange de ladite fraction de résidus solides (6) et dudit réactif (8) est mis en contact avec le flux gazeux (7), étant compris entre 1 et 30 minutes, et
- on recycle vers le séparateur (101) les solides (9) issus du réacteur (102), en les mélangeant aux fumées à épurer (1) en amont du séparateur (101).

2. Procédé suivant la revendication 1, **caractérisé en ce que** le temps de passage des solides (6, 8) dans le réacteur (102) est compris entre 1 et 6 minutes.

3. Procédé suivant l'une des revendications 1 ou 2, **caractérisé en ce que** ledit ratio stoechiométrique molaire est compris entre 3 et 10.

4. Procédé suivant l'une quelconque des revendications précédentes, **caractérisé en ce que** le réactif (8) est de la chaux vive.

5. Procédé suivant l'une quelconque des revendications précédentes, **caractérisé en ce que** le flux gazeux (7) est constitué de vapeur d'eau désurchauffée à une pression comprise entre 1 et 5 bars absolus.

6. Procédé suivant l'une quelconque des revendications 1 à 4, **caractérisé en ce que** le flux gazeux (7) est constitué de vapeur d'eau surchauffée de moins de 30°C et à une pression comprise entre 1 et 5 bars absolus.

7. Procédé suivant l'une quelconque des revendications précédentes, **caractérisé en ce que**, dans le réacteur d'extinction (102), la pression de service est comprise entre 0,8 et 1,2 bar absolu, de préférence entre 0,9 et 1 bar absolu, et **en ce que** le mélange de ladite fraction de résidus solides (6) et dudit réactif (8) présente, à l'entrée du réacteur d'extinction, une température d'au moins 110°C.

8. Procédé suivant l'une quelconque des revendications précédentes, **caractérisé en ce que** le séparateur (101) est un filtre à manches.

9. Procédé suivant l'une quelconque des revendications précédentes, **caractérisé en ce que** le réacteur d'extinction (102) est une vis sans fin.

10. Procédé suivant l'une quelconque des revendications 1 à 8, **caractérisé en ce que** le réacteur d'extinction (102) est une double vis sans fin.

## Patentansprüche

1. Verfahren zur Reinigung von Verbrennungsrauchgasen, dadurch charakterisiert, dass es die folgenden Schritte aufweist:
- Man bringt die zu reinigenden Rauchgase dazu, einen Partikelgasabscheider (101) zu durchströmen,
- man lässt, am Eingang eines Löschreaktors (102) auf einmal ein:
- einen Teil (6) von festen Rückständen (4), die aus dem Abscheider (101) hervorgegangen sind, wobei dieser Teil aus zwischen 40 und 95% der Gesamtmenge der aus dem Abscheider hervorgegangenen festen Rückstände (4) besteht,
- ein Reagenz (8), bestehend aus Erdalkalioxid, dessen Strom aus zwischen 0,5 und 10% des Stroms des Teils (6) der festen Rückstände (4) besteht und
- einen Gasstrom (7), der zwischen 50 und 100 Volumenprozent Wasserdampf enthält und dessen Durchsatz so ist, dass das stöchiometrische molare Verhältnis des Gasstroms (7), definiert als die Molzahl von Wasser pro Stunde, geteilt durch die Molzahl pro Stunde des Reagenzes (8) zwischen 2 und 50 liegt,
wobei die Zeit des Durchströmens der Feststoffe durch den Reaktor (102), während der die Mischung des Teils der festen Rückstände (6) und des Reagenzes (8) mit dem Gasstrom (7) in Kontakt gebracht wird, zwischen 1 und 30 Minuten liegt und
- man wiederverwertet die Feststoffe (9), die aus dem Reaktor (102) hervorgehen, in Richtung des Abscheiders (101) durch Mischern mit den zu reinigenden Rauchgasen (1) vor dem Abscheider (101).

2. Verfahren gemäß Anspruch 1, dadurch charakterisiert, dass die Zeit des Durchströmens der Feststoffe (6, 8) durch den Reaktor (102) zwischen 1 und 6 Minuten liegt.

3. Verfahren gemäß einem der Ansprüche 1 oder 2, dadurch charakterisiert, dass das stöchiometrische molare Verhältnis zwischen 3 und 10 liegt.

4. Verfahren gemäß einem der vorhergehenden Ansprüche, dadurch charakterisiert, dass das Reagenz (8) aus Branntkalk ist.

5. Verfahren gemäß einem der vorhergehenden Ansprüche, dadurch charakterisiert, dass der Gasstrom (7) aus entüberhitztem Wasserdampf mit einem Druck besteht, der zwischen 1 und 5 Bar absolut liegt.

6. Verfahren gemäß einem der vorhergehenden Ansprüche 1 bis 4, dadurch charakterisiert, dass der Gasstrom (7) aus entüberhitztem Wasserdampf mit mindestens 30°C und mit einem Druck, der zwischen 1 und 5 Bar absolut liegt, besteht.

7. Verfahren gemäß einem der vorhergehenden Ansprüche, dadurch charakterisiert, dass in dem Löschreaktor (102) der Arbeitsdruck zwischen 0,8 und 1,2 Bar absolut, vorzugsweise zwischen 0,9 und 1 Bar absolut, liegt und dadurch, dass die Mischung des Teils der festen Rückstände (6) und des Reagenzes (8) am Eingang des Löschreaktors eine Temperatur von mindestens 110°C hat.

8. Verfahren gemäß einem der vorhergehenden Ansprüche, dadurch charakterisiert, dass der Abscheider (101) ein Schlauchfilter ist.

9. Verfahren gemäß einem der vorhergehenden Ansprüche, dadurch charakterisiert, dass der Löschreaktor (102) eine Endlosschnecke ist.

10. Verfahren gemäß einem der Ansprüche 1 bis 8, dadurch charakterisiert, dass der Löschreaktor (102) eine Endlosdoppelschnecke ist.

## Claims

1. Method for purifying combustion fumes, **characterised in that** it comprises the following steps, in which:
• fumes to be purified (1) are passed through a gas-solid separator (101),
• the following are fed into a quench reactor (102) at the same time:
∘ a fraction (6) of the solid residues (4) discharged from the separator (101), this fraction amounting to between 40 and 95% of the total output of the solid residues discharged from the separator,
∘ a reagent (8) formed from alkaline earth metal oxide, the flux of which is in the range of between 0.5 and 10% of the flux of said fraction (6) of the solid residues (4), and
∘ a gaseous flux (7), which contains between 50 and 100% by volume of steam and the output of which is such that the stoichiometric molar ratio, defined as the number of moles of water per hour of the gaseous flux (7) divided by the number of moles of reagent (8) per hour, lies in the range of between 2 and 50,
wherein the flow time of the solids through the reactor (102), during which the mixture of said fraction of solid residues (7) and said reagent (8) is brought into contact with the gaseous flux (7), ranges between 1 and 30 minutes, and
• the solids (9) discharged from the reactor (102) are recirculated to the separator (101) by mixing them with the fumes to be purified (1) upstream of the separator (101).

2. Method according to claim 1, **characterised in that** the flow time of the solids (6, 8) through the reactor (102) ranges between 1 and 6 minutes.

3. Method according to one of claims 1 or 2, **characterised in that** said stoichiometric molar ratio ranges between 3 and 10.

4. Method according to any one of the preceding claims, **characterised in that** the reagent (8) is quick lime.

5. Method according to any one of the preceding claims, **characterised in that** the gaseous flux (7) is formed from desuperheated steam at a pressure in the range of between 1 and 5 bar abs.

6. Method according to any one of claims I to 4, **characterised in that** the gaseous flux (7) is formed from superheated steam at less than 30°C and at a pressure in the range of between 1 and 5 bar abs.

7. Method according to any one of the preceding claims, **characterised in that** the working pressure in the quench reactor (102) ranges between 0.8 and 1.2 bar abs., preferably between 0.9 and 1 bar abs., and **in that** the mixture of said fraction of solid residues (6) and said reagent (8) has a temperature of at least 110°C at the inlet of the quench reactor.

8. Method according to any one of the preceding claims, **characterised in that** the separator (101) is a bag filter.

9. Method according to any one of the preceding claims, **characterised in that** the quench reactor (102) is an endless screw.

10. Method according to any one of claims 1 to 8, **characterised in that** the quench reactor (102) is a double endless screw.
